# EUROPÄISCHE PATENTANMELDUNG

(11) **EP 1 153 828 A2**
(43) Veröffentlichungstag der Anmeldung: **14.11.2001**
(21) Anmeldenummer: 01110920.4
(22) Anmeldetag: 05.05.2001
(51) Int. Cl.: B64C 27/00, B64C 27/605

(54) **Individuelle Rotorblatt-Steuerungsvorrichtung**

(30) Priorität: 10.05.2000 DE 10022727
(71) Anmelder: ZF Luftfahrttechnik GmbH, 34379 Calden (DE)
(72) Erfinder: Fischer, Willy Gerd, 34292 Ahnatal (DE); Kunze, Oliver, 34121 Kassel (DE)
(74) Vertreter: Zietlow, Karl-Peter

(57) **Zusammenfassung**

Die Erfindung betrifft eine individuelle Rotorblatt-Steuerungsvorrichtung für einen Hubschrauber-Hauptrotor mit einem von einem Hauptgetriebe drehantreibbaren Rotormast (2), mit mehreren gleichmäßig am Umfang einer Rotornabe (4) angeordneten Rotorblättern (6), mit Primär-Steuermitteln (12, 18) zur kollektiven und zyklischen Rotorblatt-Verstellung, welche ein Übertragungsmittel (12) für Steuerbewegungen von einem nichtdrehenden System in ein drehendes System aufweisen, und mit Sekundär-Steuermitteln für jedes Rotorblatt (6), deren Steuerbewegung der Steuerbewegung der Primär-Steuermittel durch einen Überlagerungshebel (28) überlagert ist. Jedem Rotorblatt (6) ist ein im drehenden System angeordnetes Abtastelement (24) zugeordnet, welches bei einer Drehung des Rotors eine Kontur einer im nichtdrehenden System um die Rotorachse verlaufenden, geschlossenen Kurvenbahn (26) abtastet und dabei eine Hubbewegung ausführt, welche durch den Überlagerungshebel (28) in eine Einstellwinkel-Bewegung des Rotorblatts (6) umgeformt wird. Es wird vorgeschlagen, dass die Kontur der Kurvenbahn (26) durch Verstellmittel (36) verstellbar ist.

## Beschreibung

Die Erfindung betrifft eine Rotorblatt-Steuerungsvorrichtung für einen Hubschrauber-Hauptrotor mit einem von einem Hauptgetriebe drehantreibbaren Rotormast und mit mehreren gleichmäßig am Umfang einer Rotornabe angeordneten Rotorblättern und Steuermitteln für jedes Rotorblatt, wobei den Rotorblättern zusätzlich zu einer kollektiven und einer sinusförmigen, monozyklischen Einstellwinkel-Bewegung weitere Einstellwinkel-Bewegungen überlagert werden.

Übliche Steuerungsvorrichtungen für Hubschrauber-Hauptrotoren weisen eine Taumelscheibe zur Übertragung von Steuerbewegungen des Piloten vom nichtdrehenden System der Hubschrauber-Zelle in das während des Betriebs drehende System des Hauptrotors auf. Die Taumelscheibe ist gegenüber dem Rotormast zur sinusförmigen, monozyklischen Rotorblatt-Verstellung nach allen Seiten kippbar und zur kollektiven Rotorblatt-Verstellung axial verschiebbar gelagert. Die Taumelscheibe wird von mehreren, unterhalb der Taumelscheibe angeordneten Stellgliedern bzw. Steuerstangen betätigt.

Ein niedrigeres Vibrationsniveau, bessere Flugleistungen und eine geringere Geräuschemission können erzielt werden, indem der kollektiven und sinusförmigen, monozyklischen Einstellwinkel-Verstellung weitere Einstellwinkel-Änderungen überlagert werden, um beispielsweise rotorblattinduzierten Schwingungen entgegenzuwirken.

Aus der DE 196 27 869 A1 ist eine Steuerungsvorrichtung bekannt, die neben den unterhalb der Taumelscheibe angeordneten Stellgliedern, welche dem nichtdrehenden System zugeordnet sind, weitere hydraulische Stellglieder im drehenden System zur Überlagerung von individuellen Einstellwinkel-Änderungen umfaßt. Die Energieversorgung der im drehenden System angeordneten Aktuatoren ist sehr aufwendig. Bei der Versorgung der hydraulischen Stellglieder, deren Versorgungseinrichtung im nichtdrehenden System der Hubschrauberzelle angeordnet ist, treten erhebliche Leistungsverluste allein an den notwendigen Leitungen und Drehdurchführungen auf. Sollen hochfrequente Stellbewegungen von der Versorgungseinrichtung über die hydraulischen Leitungen und Drehdurchführungen auf die Rotorblätter übertragen werden, so wird eine schwere und große Versorgungseinrichtung mit einer sehr hohen installierten, hydraulischen Leistung benötigt, obwohl die Leistung, die eigentlich zur Verstellung der Rotorblätter benötigt wird, sehr viel kleiner ist.

Aus dem deutschen Gebrauchsmuster G 89 09 165.5 ist eine Rotorblatt-Steuerungsvorrichtung mit individuell auf die Rotorblätter wirkenden, hydraulischen Stellgliedern bekannt, bei der eine Vielzahl von Steuerkurven, welche im drehenden System des Hauptrotors angeordnet sind, von einer verkoppelten Verdrängungskörperanordnung gleichzeitig abgetastet wird. Diese bekannte hydraulische Rotorblatt-Steuerungsvorrichtung ist jedoch relativ aufwendig und weist eine Vielzahl von Komponenten auf.

Die US 3,031,017 zeigt eine gattungsgemäße Rotorblatt-Steuerungsvorrichtung, mit der der kollektiven und sinusförmigen, zyklischen Rotorblatt-Verstellung eine weitere zyklische Einstellwinkel-Bewegung überlagert wird. Hierzu ist jedem Rotorblatt ein mit dem drehenden Teil der Taumelscheibe umlaufendes Abtastelement zugeordnet, welches bei einer Drehung des Rotors eine Kontur einer Kurvenbahn abtastet, die im nichtdrehenden Teil der Taumelscheibe eingearbeitet ist. Die Hubbewegung des Abtastelements wird der Steuerbewegung der Taumelscheibe durch einen Mischhebel überlagert. Es wird bei jedem Umlauf dieselbe Kontur abgetastet.

Im Gegensatz zu Rotorblatt-Steuerungsvorrichtungen, deren Aktuatoren im drehenden System angeordnet sind und während eines Umlaufs relativ hochfrequente Steuerbewegungen ausführen, sind bei dieser Rotorblatt-Steuerungsvorrichtung keine Aktuatoren im drehenden System notwendig, da die Hubbewegung durch einfaches Abtasten der Kontur der Kurvenbahn erzeugt wird. Es werden keine aufwendigen Drehdurchführungen für die Leistungsversorgung und Ansteuerung der Aktuatoren im drehenden System benötigt. Der Leistungsbedarf der Rotorblatt-Steuerungsvorrichtung ist wesentlich geringer. Die Überlagerung der Bewegungen der Taumelscheibe, die als Primär-Steuermittel dient, und der Abtastelemente mittels eines Überlagerungshebels bietet einige Vorteile. So kann über ein entsprechend gewähltes Hebelverhältnis eine Übersetzung des Stellwegs bzw. der Stellkraft erzielt werden.

Bei dieser Steuerungsvorrichtung ist jedoch nachteilig, dass nur ein bestimmter Flugzustand optimiert werden kann, da die überlagerte Einstellwinkel-Bewegung unabhängig vom Flugzustand immer dieselbe ist.

Der Erfindung liegt daher die Aufgabe zugrunde, eine gattungsgemäße Rotorblatt-Steuerungsvorrichtung so weiterzubilden, dass die Einstellwinkel-Bewegung für verschiedene Flugzustände mit geringem Aufwand und geringem Leistungsbedarf optimierbar ist. Sie soll ferner einen geringen Bauraum einnehmen und ein geringes Gewicht aufweisen.

Erfindungsgemäß wird diese Aufgabe durch die Merkmale der unabhängigen Ansprüche gelöst.

Demnach sind Verstellmittel zur Verstellung der Kontur der Kurvenbahn vorgesehen. Da sich die Kurvenbahn im nichtdrehenden System befindet, sind keine aufwendigen Drehdurchführungen für Steuer- und Versorgungsleitungen erforderlich.

Vorteilhaft ist weiterhin, dass nicht für jedes Rotorblatt individuelle Stellglieder benötigt werden, sondern lediglich ein einfach aufgebautes, individuelles Abtastelement. Die Verstellmittel zur Verstellung der Kurvenbahn brauchen keine sehr schnellen Stellbewegungen auszuführen. Während eines konstanten Flugzustands sind - im Gegensatz zu Systemen, deren Stellglieder im drehenden System angeordnet sind - gar keine Stellbewegungen notwendig. Der Leistungsbedarf und Ansteuerungsaufwand der erfindungsgemäßen Rotorblatt-Steuerungsvorrichtung ist daher wesentlich geringer, so dass keine große und schwere Versorgungseinrichtung benötigt wird. Stellglieder sind also lediglich im nichtdrehenden System des Hubschraubers angeordnet, wo sie leicht ansteuerbar sind. Es ist eine wesentlich geringere Zahl von dynamisch hoch beanspruchten Teilen vorhanden, wodurch eine drastische Verbesserung der Zuverlässigkeit erzielt wird. Die Ansteuerelemente für die Verstellmittel brauchen nur geringen Anforderungen bezüglich ihrer Dynamik zu genügen.

In einer vorteilhaften Ausgestaltung der Erfindung bestehen die Primär-Steuermittel zur kollektiven und monozyklischen Rotorblatt-Verstellung aus einer Taumelscheibe mit einem nichtdrehenden, an die Hubschrauber-Zelle gekoppelten und einem bei Betrieb drehenden, an den Rotorkopf gekoppelten Teil. Die Taumelscheibe ist zur kollektiven Rotorblatt-Verstellung gegenüber dem Rotormast axial verschiebbar und zur sinusförmigen, monozyklischen Rotorblatt-Verstellung gegenüber dem Rotormast kippbar gelagert. Sie ist von mindestens drei, am nichtdrehenden Teil angelenkten Steuerstangen oder Stellgliedern betätigbar. Die Kurvenbahn, die ein Teil der Sekundär-Steuermittel ist, ist an dem nichtdrehenden Teil und jedes der Abtastelemente an dem drehenden Teil der Taumelscheibe angeordnet. Am drehenden Teil der Taumelscheibe ist für jedes Rotorblatt ein Überlagerungshebel schwenkbar gelagert, an dem sowohl ein Abtastelemement als auch eine Steuerstange für das Rotorblatt angelenkt ist, so dass dieser Überlagerungshebel sowohl die primäre Steuerbewegung der Taumelscheibe als auch die sekundäre Steuerbewegung des Abtastelements auf eine Steuerstange für das Rotorblatt überträgt.

Anstelle einer Taumelscheibe ist jedoch auch eine sogenannte Spinne verwendbar.

Alle Abtastelemente tasten bei einem Umlauf dieselbe Kurvenbahn ab, deren Kontur allerdings durch die Verstellmittel verstellbar ist. Dies kann dadurch erreicht werden, dass die Kontur der Kurvenbahn durch eine Vielzahl von nebeneinander angeordneten, längenverstellbaren Aktuatoren bestimmt wird.

Jedes der Abtastelemente kann mit einem elastischen Mittel, wie einer Feder, an die Kurvenbahn angefedert sein, so dass es immer der Kontur der Kurvenbahn folgt und eine Rückstellbewegung selbsttätig ausführt. Die Federkraft ist dabei so groß zu wählen, dass ein Abheben von der Kurvenbahn auch bei sehr großen Belastungen auf die Steuerstangen vermieden wird. Für die Rückstellbewegung jedes Abtastelements kann jedoch auch eine zweite Kurvenbahn vorgesehen sein. Beispielsweise kann das Abtastelement in einer zwischen den beiden Kurvenbahnen gebildeten Nut mit im wesentlichen konstanter Breite geführt werden, wobei die Nut die Hubbewegung des Abtastelements zweiseitig begrenzt.

Eine vereinfachte Rotorblatt-Steuerungsvorrichtung kann auch ohne eine Taumelscheibe dadurch gebildet werden, dass jedem Rotorblatt ein im drehenden System angeordnetes Abtastelement zugeordnet ist, welches bei einer Drehung des Rotors eine Kontur einer im nichtdrehenden System um die Rotorachse verlaufenden, geschlossenen Kurvenbahn abtastet, deren Kontur durch Verstellmittel verstellbar ist. Jedes der Abtastelemente führt dabei eine Hubbewegung aus, die auf den Hebelmechanismus übertragen wird. Die Kontur der Kurvenbahn dieser Ausführungsform ist dabei in weiten Grenzen verstellbar, so dass auch die primäre Einstellwinkel-Bewegung über das Abtastelement auf das Rotorblatt übertragen wird.

Die Erfindung wird anhand der beigefügten Figuren näher erläutert, wobei
- Fig. 1: schematisch einen Längs-Schnitt durch eine erste Ausführungsform der Erfindung;
- Fig. 2: schematisch einen Axial-Schnitt durch eine Ausführungsform gemäß Fig. 1;
- Fig. 3: schematisch eine dritte Ausführungsform der Erfindung im Längs-Schnitt;
- Fig. 4: eine Teil-Darstellung einer Ansicht einer Ausführungsform gemäß Fig. 3 und
- Fig. 5: ein Teil eines längenverstellbaren Bandes
zeigen.

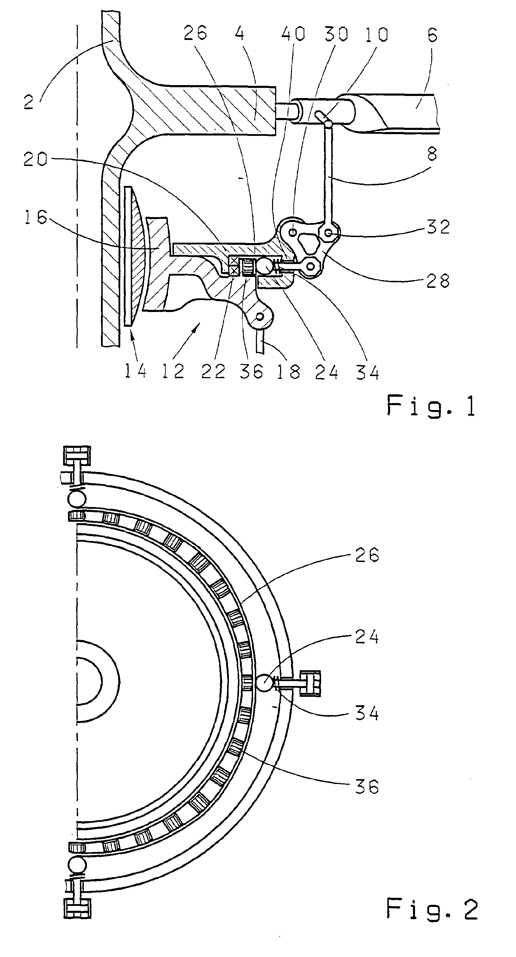

In Fig. 1 ist mit 2 ein von einem nicht dargestellten Hauptgetriebe drehantreibbarer Rotormast bezeichnet, der eine Rotornabe 4 aufweist, an deren Umfang mehrere Rotorblätter 6, von denen eines gezeigt ist, gleichmäßig angeordnet sind. Der Einstellwinkel jedes Rotorblatts um seine Längsachse ist mittels einer Steuerstange 8, die auf einen Hebel 10 des gelenkig an der Rotornabe befestigten Rotorblatts 6 wirkt, verstellbar. Zur Übertragung von Steuerbewegungen aus dem nichtdrehenden System der Hubschrauber-Zelle ins drehende System des Hubschrauber-Rotors ist eine Taumelscheibe 12 vorgesehen, die mittels eines Lagers 14 axial verschiebbar und kippbar am Rotormast 2 gelagert ist. Sie besteht aus einem nichtdrehenden Teil 16, an dem mehrere Steuerstangen 18, von denen eine gezeigt ist, angelenkt sind und einem mit dem Rotormast 2 drehbaren Teil 20. Zwischen dem drehenden Teil der Taumelscheibe 20 und dem nichtdrehenden Teil der Taumelscheibe 16 sind Lager 22 vorgesehen. Zur kollektiven und monozyklischen Rotorblatt-Verstellung wird die Taumelscheibe durch die angelenkten Steuerstangen 18 axial entlang dem Rotormast nach oben oder unten bewegt oder gekippt. Jedem Rotorblatt 6 ist ein im drehenden System angeordnetes Abtastelement 24 zugeordnet, welches bei einer Drehung des Rotormasts 2 eine Kontur einer im nichtdrehenden System um die Rotorachse verlaufenden geschlossenen Kurvenbahn 26 abtastet. Das Abtastelement 24 führt dabei eine Hubbewegung aus, welche durch einen Überlagerungshebel 28 auf die Steuerstange 8 übertragen und in eine Einstellwinkelbewegung des Rotorblatts 6 umgeformt wird.

In der in Fig. 1 gezeigten Ausführungsform besteht das Abtastelement 24 aus einer Stange, die an einem Ende einen Abtastkopf aufweist und die mit dem anderen Ende an den Umlenkhebel 28 angelenkt ist. Der Umlenkhebel 28 ist um eine in tangentialer Richtung zur Taumelscheibe ausgerichtete Drehachse 30 schwenkbar am drehenden Teil 20 der Taumelscheibe 12 angelenkt. Die Steuerstange 8, die an einem dritten Anlenkpunkt 32 an dem Umlenkhebel 28 angelenkt ist, erfährt eine Steuerbewegung, welche durch Überlagerung der primären Steuerbewegung der Taumelscheibe 14 mit der sekundären Steuerbewegung jedes Abtastelements 24 entsteht. Das Abtastelement 24 ist durch eine Feder 34 gegen die Kontur der Kurvenbahn 26 vorgespannt, so dass es in ständigem und gleitenden Kontakt mit der Kurvenbahn 26 ist. Die Oberfläche der Kurvenbahn 26 weist radial nach außen, so dass die Hubbewegung des Abtastelements 24 in radialer Richtung erfolgt. Hierdurch wird eine bauraumgünstige Gesamtanordnung erzielt.

Erfindungsgemäß ist die Kontur der Kurvenbahn 26 durch Verstellmittel in Form einer Vielzahl von nebeneinander angeordneten, längenverstellbaren Aktuatoren 36 verstellbar.

Fig. 2 zeigt die Anordnung der Aktuatoren 36, die zur Veränderung der Kontur der Kurvenbahn 26 dienen. Die in Fig. 2 gezeigte Steuerungsvorrichtung ist für einen Hubschrauber-Hauptrotor mit vier Rotorblättern vorgesehen, wobei jedem der vier Rotorblätter ein Abtastelement 24 zugeordnet ist, von denen in Fig. 2 drei gezeigt sind. Die längenverstellbaren Aktuatoren 36 können Piezokristalle umfassen, die ihre Länge durch Anlegen einer elektrischen Spannung verändern. Natürlich können an dieser Stelle auch andere längenverstellbare Stellglieder, wie z. B. elektromechanischer oder hydromechanischer Bauart, eingesetzt werden.

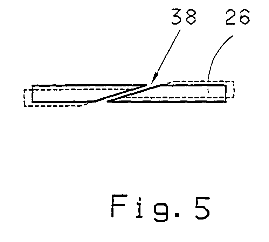

Zum Ausgleich des Übergangs zwischen benachbarten Aktuatoren 36 ist zwischen den Aktuatoren 36 und den Abtastelementen 34 ein biegbares Band 26 als verformbares Ausgleichsmittel angeordnet, dessen eine Seite die Oberfläche der Kurvenbahn bildet. Das Band 26 ist in Umfangsrichtung elastisch, so dass eine durch eine kollektive Verstellung der Aktuatoren hervorgerufene Umfangsänderung ausgleichbar ist. Alternativ hierzu kann das Band 26 an mindestens einer Stelle am Umfang eine Verbindungsstelle 38 aufweisen (Fig. 5), an der Teile des Bandes 26 entlang einer schräg verlaufenden Fügelinie gegeneinander verschieblich sind. Es kann auch ein Band verwendet werden, das in Umfangsrichtung nicht oder nur sehr wenig elastisch ist, wenn ein Steuerungsverfahren eingesetzt wird, bei dem eine im wesentlichen konstante Umfangslänge des Bandes durch kollektives Verstellen aller Aktuatoren 36 erzielt wird.

Die Ausführungsform gemäß Fig. 1 weist zwischen dem drehenden Teil 20 der Taumelscheibe und dem nichtdrehenden Teil 16 der Taumelscheibe einen ringförmigen Hohlraum auf, in dem der Abtastkopf der Abtastelemente 24 sowie die Aktuatoren 36 und das Band 26, welche zusammen die Kurvenbahn bilden, angeordnet sind. Der Mechanismus 36, 26, 24, 34 für die Erzeugung der sekundären Steuerbewegungen ist durch diese in die Taumelscheibe integrierte Bauweise sehr gut vor Umwelteinwirkungen geschützt. Im drehenden Teil der Taumelscheibe 20 ist für jedes Abtastelement 24 eine vom Hohlraum radial nach außen weisende Öffnung 40 zur Durchführung des Abtastelements 24 vorgesehen.

Mit der in den Fig. 1 und 2 gezeigten Ausführungsform ist, abhängig von der Zahl der Aktuatoren 36 und deren Stellweg, jede beliebige Kontur der Kurvenbahn realisierbar, so dass die Einstellwinkel-Bewegung der Rotorblätter in jedem Flugzustand optimierbar ist.

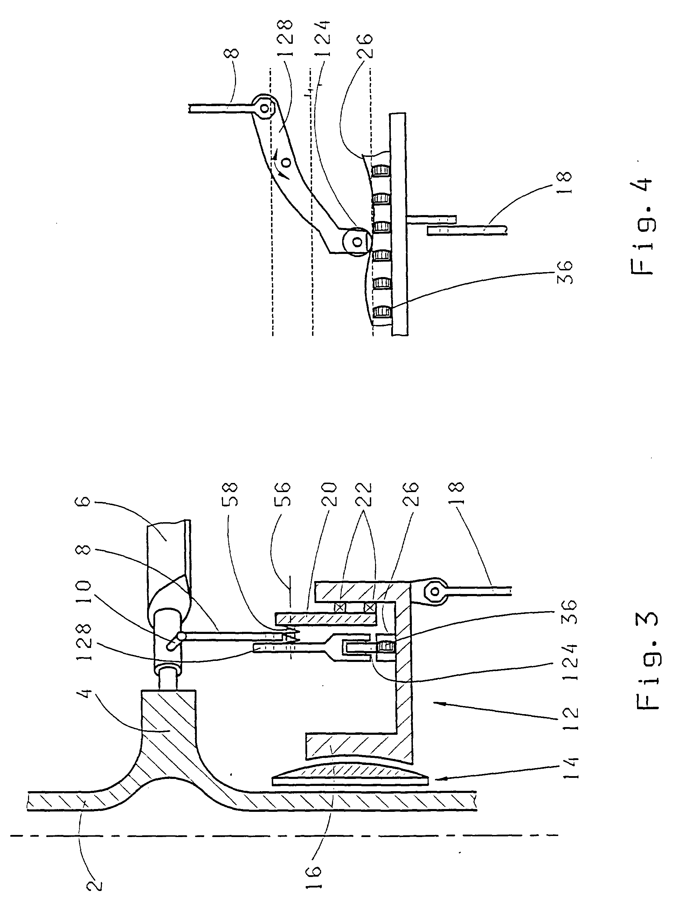

Fig. 3 zeigt eine Ausführungsform der Erfindung, bei der für gleiche Positionen gleiche Bezugsziffern verwendet sind. Im Unterschied zur Ausführungsform nach Fig. 1 weist die Oberfläche der Kurvenbahn 26 in axialer Richtung von der Taumelscheibe nach oben, so dass die Hubbewegung des Abtastelements, das hier als auf der Kurvenbahn 26 wälzender, drehbarer Wälzkörper 124 ausgebildet ist, im wesentlichen in vertikaler Richtung erfolgt. Der Wälzkörper, der eine Rolle 124 ist, ist drehbar in einem Hebelelement 128 gelagert. Das Hebelelement 128 ist schwenkbar am drehenden Teil 20 der Taumelscheibe gelagert. Die Drehachse 56 ist zu einer Mittelachse der Taumelscheibe 12 radial ausgerichtet. Das Abtastelement 124 ist durch eine Drehfeder 58 an die durch Aktuatoren 36 verstellbare Kontur der Kurvenbahn 26 angefedert.

Mit einem derartigen Abtastelement, das auch in Kombination mit der Ausführungsform gemäß Fig. 1 verwendbar ist, sind die Reibungsverluste zwischen Kurvenbahn und Abtastelement geringer.

### Bezugszeichen

- 2: Rotormast
- 4: Rotornabe
- 6: Rotorblatt
- 8: Steuerstange
- 10: Hebel
- 12: Taumelscheibe
- 14: Lager
- 16: nichtdrehender Teil der Taumelscheibe
- 18: Steuerstange
- 20: drehender Teil der Taumelscheibe
- 22: Lager
- 24: Abtastelement
- 26: Band
- 28: Hebel
- 30: Achse
- 32: Anlenkpunkt
- 34: Feder
- 36: Aktuator
- 38: Verbindungsstelle
- 40: Öffnung
- 56: Achse
- 58: Drehfeder
- 124: Rolle
- 128: Hebel

## Patentansprüche

1. Individuelle Rotorblatt-Steuerungsvorrichtung für einen Hubschrauberhauptrotor mit einem von einem Hauptgetriebe drehantreibbaren Rotormast (2), mit mehreren gleichmäßig am Umfang einer Rotornabe (4) angeordneten Rotorblättern (6), mit Primärsteuermitteln (12, 18) zur kollektiven und sinusförmigen, zyklischen Rotorblattverstellung, welche ein Übertragungsmittel (12) für Steuerbewegungen von einem nichtdrehenden System in ein drehendes System aufweisen und mit Sekundärsteuermitteln für jedes Rotorblatt, deren Steuerbewegung der Steuerbewegung der Primärsteuermittel durch einen Überlagerungshebel (28) überlagert ist, wobei jedem Rotorblatt (6) ein im drehenden System angeordnetes Abtastelement (24) zugeordnet ist, welches bei einer Drehung des Rotors eine Kontur einer im nichtdrehenden System um die Rotorachse verlaufenden geschlossenen Kurvenbahn (26) abtastet und dabei eine Hubbewegung ausführt, welche durch den Überlagerungshebel (28) in eine Einstellwinkelbewegung des Rotorblatts (6) umgeformt wird, **dadurch gekennzeichnet, dass** die Kontur der Kurvenbahn (26) durch Verstellmittel (36) verstellbar ist.

2. Rotorblatt-Steuerungsvorrichtung nach Anspruch 1, **dadurch gekennzeichnet, dass** die Primär-steuermittel aus einer Taumelscheibe (12) mit einem nichtdrehenden Teil (16) und einem bei Betrieb drehenden Teil (20) bestehen, welche gegenüber dem Rotormast (2) kippbar und axial verschiebbar gelagert ist, und die von am nichtdrehenden Teil (16) angelenkten Steuerstangen (18) betätigbar ist und dass die Kurvenbahn (26) an dem nichtdrehenden Teil (16) und jedes der Abtastelemente (24) an dem drehenden Teil (20) der Taumelscheibe (12) angeordnet ist.

3. Rotorblatt-Steuerungsvorrichtung nach Anspruch 2, dass der Überlagerungshebel als Umlenkhebel (28) ausgebildet ist, der schwenkbar am drehenden Teil (20) der Taumelscheibe (12) gelagert ist, und der sowohl die primäre Steuerbewegung der Taumelscheibe (12) als auch die sekundäre Steuerbewegung jedes Abtastelements (24) auf eine Steuerstange (8) für das Rotorblatt (6) überträgt.

4. Rotorblatt-Steuerungsvorrichtung nach einem der Ansprüche 1 bis 3, **dadurch gekennzeichnet, dass** die Oberfläche der Kurvenbahn (26) radial nach außen weist, so dass die Hubbewegung des Abtastelements (24) in radialer Richtung erfolgt.

5. Rotorblatt-Steuerungsvorrichtung nach einem der Ansprüche 1 bis 3, **dadurch gekennzeichnet, dass** die Oberfläche der Kurvenbahn (26) nach oben weist, so dass die Hubbwegegung des Abtastelements (24) in vertikaler Richtung erfolgt.

6. Rotorblatt-Steuerungsvorrichtung nach Anspruch 5, **dadurch gekennzeichnet, dass** die Kontur der Kurvenbahn (26) durch eine Vielzahl von nebeneinander angeordneten längenverstellbaren Aktuatoren (36) bestimmt wird.

7. Rotorblatt-Steuerungsvorrichtung nach Anspruch 6, **dadurch gekennzeichnet, dass** die Aktuatoren (36) Piezokristalle umfassen, die ihre Länge durch Anlegen einer elektrischen Spannung verändern.

8. Rotorblatt-Steuerungsvorrichtung nach Anspruch 6 oder 7, **dadurch gekennzeichnet, dass** zwischen den Aktuatoren (36) und den Abtastelementen (24) ein verformbares Ausgleichsmittel (26) vorgesehen ist, dessen eine Seite die Oberfläche der Kurvenbahn bildet.

9. Rotorblatt-Steuerungsvorrichtung nach Anspruch 8, **dadurch gekennzeichnet, dass** das Ausgleichsmittel ein Band (26) ist, welches durch die Aktuatoren verbiegbar ist.

10. Rotorblatt-Steuerungsvorrichtung nach Anspruch 8 oder 9, **dadurch gekennzeichnet, dass** das Ausgleichsmittel (26) in Umfangsrichtung elastisch ist, so dass eine durch die Aktuatoren (36) hervorgerufene Umfangsänderung ausgleichbar ist.

11. Rotorblatt-Steuerungsvorrichtung nach Anspruch 9, **dadurch gekennzeichnet, dass** das Band (26) an mindeststens einer Stelle am Umfang eine Verbindungsstelle (38) aufweist, an der Teile des Bandes entlang einer schräg verlaufenden Fügelinie gegeneinander verschieblich sind.

12. Rotorblatt-Steuerungsvorrichtung nach einem der Ansprüche 1 bis 11, **dadurch gekennzeichnet, dass** eine zweite Kurvenbahn für die Rückstellbewegung des Abtastelements vorgesehen ist.

13. Rotorblatt-Steuerungsvorrichtung nach einem der Ansprüche 2 bis 12, **dadurch gekennzeichnet, dass** die Kurvenbahn (26), die Abtastelemente (24) sowie die Verstellmittel (36) in einem ringförmigen Hohlraum angeordnet sind, welcher zwischen Teilen des drehenden Teils (20) und des nichtdrehenden Teils (16) der Taumelscheibe (12) gebildet ist.

14. Rotorblatt-Steuerungsvorrichtung nach Anspruch 13, **dadurch gekennzeichnet, dass** im drehenden Teil (20) der Taumelscheibe (12) eine vom Hohlraum radial nach außen weisende Öffnung (40) zur Durchführung des Abtastelements vorgesehen ist.

15. Individuelle Rotorblatt-Steuerungsvorrichtung für einen Hubschrauberhauptrotor mit einem von einem Hauptgetriebe drehantreibbaren Rotormast (2), mit mehreren gleichmäßig am Umfang einer Rotornabe (4) angeordneten Rotorblättern (6) und Steuermitteln für jedes Rotorblatt (6), deren Steuerbewegung durch einen Hebelmechanismus (28) in eine Einstellwinkelbewegung des Rotorblatts (6) umgeformt werden, wobei jedem Rotorblatt ein im drehenden System angeordnetes Abtastelement (24) zugeordnet ist, welches bei einer Drehung des Rotors eine Kontur einer im nichtdrehenden System um die Rotorachse verlaufenden geschlossenen Kurvenbahn (26) abtastet, deren Verlauf durch Verstellmittel (36) verstellbar ist und dabei eine Hubbewegung ausführt, die auf den Hebelmechanismus (28) übertragen wird.

16. Verfahren zur Steuerung einer Rotorblatt-Steuerungsvorrichtung nach Anspruch 8 oder 9, **dadurch gekennzeichnet, dass** eine im wesentlichen konstante Umfangslänge des Ausgleichsmittels bzw. des Bandes (26) durch kollektives Verstellen aller Aktuatoren (36) erzielt wird.
